(19) Europäisches Patentamt
European Patent Office
Office européen des brevets

(11) **EP 2 938 065 A1**

(12) **EUROPEAN PATENT APPLICATION**

(43) Date of publication:
**28.10.2015 Bulletin 2015/44**

(51) Int Cl.:
***H04N 5/235*** *(2006.01)*

(21) Application number: **14305599.4**

(22) Date of filing: **23.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Bureller, Olivier**
  **35576 Cesson Sévigné (FR)**

• **Hudon, Matis**
  **35576 Cesson Sévigné (FR)**
• **Kerbiriou, Paul**
  **35576 Cesson Sévigné (FR)**
• **Schubert, Arno**
  **35576 Cesson Sévigné (FR)**

(74) Representative: **Browaeys, Jean-Philippe**
**Technicolor**
**1, rue Jeanne d'Arc**
**92443 Issy-les-Moulineaux (FR)**

(54) **Method and device for capturing frames of a scene under different illumination configurations**

(57) An image acquisition system for capturing images of a scene comprising at least one light unit for illuminating the scene; a light control device for controlling illumination by the at least one light unit in accordance with a plurality of illumination configurations applied in an alternate manner; an imaging device for capturing a sequence of images of the illuminated scene; the sequence of images comprising a plurality of interleaved series of images, each image series corresponding to a respective illumination configuration; wherein the light control device is configured to control at least one illumination parameter of the at least one light unit in time synchronization with the at least one imaging device; and an image acquisition device for reconstructing, from the captured sequence of images, a series of images of the scene for each illumination configuration. The light units are configured to illuminate the scene in a burst of illumination pulses comprising one or more illumination pulses; and the at least one controlled illumination parameter includes at least one of illumination burst duration, illumination burst frequency, illumination burst delay; illumination power.

FIG. 1

EP 2 938 065 A1

**Description**

TECHNICAL FIELD

The present invention relates to a method and device for capturing frames of a scene under different illumination configurations. Particularly, but not exclusively, the invention relates to a method and device for capturing frames of a scene under different lighting configurations in film production.

BACKGROUND

In image capture of a scene, the lighting of the scene has an influence on the quality of image captured as well as the visual effects produced. For instance, in film production, directors are often forced to make several takes of the same scene in order to have sequences of images of the same scene under different lighting conditions.

Moreover, several studies have shown that useful information can be obtained when shooting a scene under different lighting conditions, for example High Dynamic Range (HDR) information, depth information of objects in a scene, angles of objects in a scene etc. Such information is typically obtained by acquiring images of the scene using different lighting devices, for example lights of different intensities, structured light and colored lights. Taking images of the scene under different lighting conditions is however time consuming. Moreover, the scene may change between different takes, by movement of a subject for example, resulting in the images captured under the different lighting conditions not corresponding to the same scene.

SUMMARY

The present invention has been devised with the foregoing in mind.

In a general form the invention concerns a method of capturing images of a scene under different illumination (lighting) conditions. Different lighting conditions are provided alternatively and a series of images corresponding to each lighting condition is extracted from an acquired sequence of images of the scene.

According to a first aspect of the invention there is provided a method of capturing images of a scene comprising illuminating the scene with at least one light unit in accordance with a plurality of illumination configurations applied in an alternate manner; capturing a sequence of images of the illuminated scene with at least one imaging device; the sequence of images comprising a plurality of interleaved series of images, each image series corresponding to a respective illumination configuration; wherein each illumination configuration is provided by controlling at least one illumination parameter of the light units in time synchronization with the at least one imaging device; and reconstructing a series of images of the scene, from the captured sequence of images for each illumination configuration.

For example, the light units may be configured to illuminate the scene in a burst of illumination pulses comprising one or more illumination pulses; and the at least one controlled illumination parameter includes at least one of illumination frequency, illumination burst duration, illumination pulse frequency within a burst, illumination pulses duty cycle, illumination burst delay; illumination power, and illumination frame offset.

In an embodiment, controlling the at least one illumination parameter is performed by pulse width modulation to generate the burst of illumination pulses.

In an embodiment, controlling the at least one illumination parameter comprises controlling the total pulse illumination time with respect to the exposure time of the at least one imaging device.

In an embodiment, controlling the at least one illumination parameter comprises controlling an illumination time shift wherein the time occurrence of the illumination within an image shifts from frame to frame of an image series.

In an embodiment, the illumination time shift is determined in dependence upon the exposure time duration of the camera and the duration of the burst of illumination pulses.

In an embodiment, the illumination time shift is determined based on the display frequency of the reconstructed series of images.

In an embodiment, the illumination time shift is greater than or equal to the sum of the exposure time duration and the time duration of the burst of illumination pulses.

A second aspect of the invention provides a method of filming a scene for a movie under different lighting conditions comprising the method of any embodiment of the first aspect of the invention.

A third aspect of the invention provides an image acquisition system for capturing images of a scene comprising: at least one light unit for illuminating the scene; a light control device for controlling illumination by the at least one light unit in accordance with a plurality of illumination configurations applied in an alternate manner; wherein the light control device is configured to control at least one illumination parameter of the at least one light unit in time synchronization with the at least one imaging device to provide a respective illumination configuration; an imaging device for capturing a sequence of images of the illuminated scene; the sequence of images comprising a plurality of interleaved series of images, each image series corresponding to a respective illumination configuration; and an image acquisition device for reconstructing, from the captured sequence of images, a series of images of the scene for each illumination configuration of the plurality of illumination configurations.

In an embodiment, the at least one light unit is configured to illuminate the scene by a burst of illumination pulses, each burst comprising one or more illumination pulses; and the at least one controlled illumination parameter includes at least one of at least one of illumination frequency, illumination burst duration, illumination pulse frequency within a burst, illumination duty cycle, illumination burst delay; illumination power, and illumination frame offset.

In an embodiment, the light control device comprises a pulse width modulator for performing pulse width modulation to generate the burst of illumination pulses.

In an embodiment, the light control device is configured to control the total pulse illumination time with respect to the exposure time of the at least one imaging device.

In an embodiment, the light control device is configured to control an illumination time shift wherein the time occurrence of the illumination within an image shifts from frame to frame of an image series.

A further aspect of the invention provides a film production system for filming a scene for a movie under different lighting conditions comprising the image acquisition system according to any embodiment of the second aspect of the invention.

At least part of some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since some elements of the present invention can be implemented, at least partially in software, aspects of the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1 is a schematic block diagram of an imaging system in which one or more embodiments of the invention may be implemented;

FIG. 2 graphically illustrates a camera acquisition sequence and corresponding illumination sequences in accordance with an embodiment of the invention;

FIG. 3 graphically illustrates a sequence of images acquired by the camera and series of frames obtained from the sequence of images in accordance with an embodiment of the invention;

FIG. 4 is a schematic block diagram of an image acquisition system in accordance with an embodiment of the invention;

FIG. 5 graphically illustrates a sequence generated by PWM in accordance with an embodiment of the invention;

FIG. 6 graphically illustrates a plurality of illumination sequences generated by PWM in accordance with an embodiment of the invention.

FIG. 7 is a schematic block diagram of an imaging device in accordance with an embodiment of the invention;

FIG. 8 is a schematic diagram of an image sensor array in accordance with an embodiment of the invention;

FIG. 9A & 9B are graphical representations of examples of a rolling shutter technique;

FIG. 10 is a graphical representation of an example of control of a illumination shift in accordance with an embodiment of the invention; and

FIG. 11 is a graphical representation of an example of control of a illumination shift in accordance with an embodiment of the invention in which image sub-regions belonging to the same illumination event are identified.

DETAILED DESCRIPTION

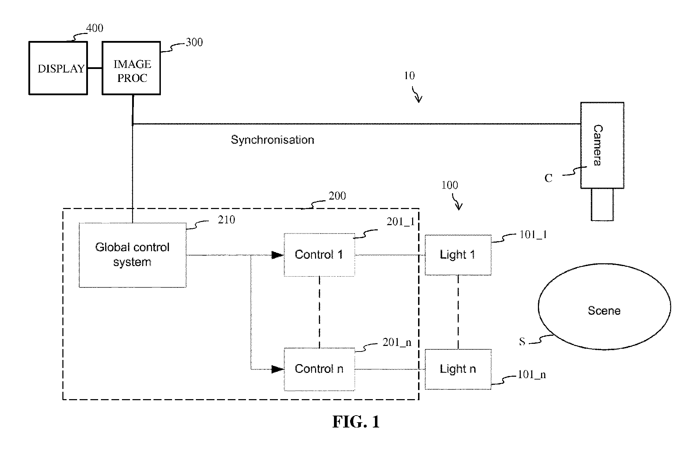

Figure 1 is a schematic block diagram of an imaging system in which one or more embodiments of the invention may be implemented.

The imaging system 10 comprises an illumination system 100 comprising a plurality of light units 101_1 to 101_n for illuminating a scene S, an illumination control device 200 for controlling flash parameters of the flash units 101_1 to 101_x and a camera C for acquiring sets of images of the scene S and an image processing module 300 for processing acquired images of the scene. A display unit 400may be provided for displaying the acquired images of the scene.

The lighting units 101_1 to 101_n may be any suitable lighting unit for illuminating the scene S such as, for example, one or more LEDs.

The illumination control device 200 includes control units 201_1 to 201_n for respectively controlling each lighting unit 101_1 to 101_n, and a global control module 210 for controlling and synchronizing the respective control units 201_1 to 201_n. The illumination control device 200 controls the lighting units 101_1 to 101_n according to a plurality of the illumination configurations, implemented in alternate sequenced manner, resulting in the acquisition of a sequence of images composed of series of images, each series corresponding to a respective illumination configuration.

Each control unit 201_1 to 201_n is configured to generate a set of modulable pulses for controlling illumination of the respective lighting unit 101_1 to 101_n.

Each illumination configuration comprises setting at least one illumination parameter for the respective image sequence. Light may be emitted by the lighting units in the form of light pulses as a single illumination pulse or a burst of illumination pulses. Adjustable illumination parameters for each image sequence include one or more of the following parameters for one or more camera frames of the corresponding frame sequence:

- identifying which lighting units of the available lighting unit sto enable, for example each lighting unit may be enabled individually, as a set of lighting units or as a subset of lighting units;
- illumination frequency (also referred to as stroboscopic frequency) of the light pulses or bursts of a lighting unit with respect to the camera frame acquisition frequency;
- illumination burst duration for a burst of pulses in a frame, defining the time from the start of a first pulse of a burst to the end of a last pulse of a burst; or in the case of a single pulse the duration of time from the start of the pulse to the end of the pulse. This illumination burst duration enables the quantity of light taken during camera exposure to be controlled;
- the duty cycle of pulses of a burst enabling the power intensity of the light to be controlled.
- light pulse modulation period or frequency of the pulses of a burst of an LED unit; The total quantity of light emitted during a camera exposure, i.e. the total illumination time for a frame, is based on the duty cycle and period; and the illumination pulse duration for the burst;
- frame offset (in terms of frames captured by the camera) defining for which camera frames the respective lighting unit(s) is enabled;
- illumination delay to enable temporal delaying of the illumination pulse(s) of a lighting unit with respect to the camera frame acquisition;
- illumination time shift, to shift, from frame to frame, the time of the initial illumination pulse within a camera frame;

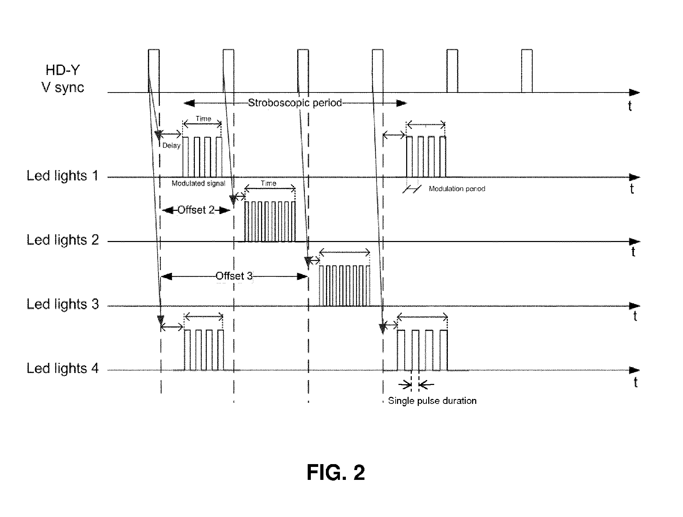

The illumination parameters are graphically illustrated in the example Figure 2 for an exemplary case of four lighting units.

The top line graphically illustrates the camera frame acquisition rate (camera period); and the lower four lines each graphically illustrate the respective illumination parameters set for each of four lighting units with respect to the frame acquisition rate of the camera. The illumination parameters may be set for each lighting unit individually, as a set of lighting units or as a subset of lighting units. In this example the four lighting units can be used to create three subsequences of images from an acquired sequence of frames.

In the illustrated example of Figure 2, for the first set of LEDs of the first lighting unit the stroboscopic period is three times the camera frame acquisition period such that a set of modulated light pulses is emitted once for every three camera frames. The modulation period of a set modulated light pulses is illustrated, as well as the illumination burst duration (Time) for a burst of light pulses, the time delay (Delay) from the camera frame start time to the start of the burst of light pulses within the frame. The quantity of light emitted during the camera frame is dependent upon the illumination burst duration (Time), the duty cycle and the period of pulses within the burst. For the second set of LEDs a frame offset is set such that the first burst of light pulses occurs in the second frame of the illustrated camera frame sequence, while for the third set of LEDs a frame offset is set such that the first burst of light pulses occurs in the third frame of the illustrated set of frames. The fourth set of LEDs has same stroboscopic period as the first set, with different parameters for delay, duration of burst and modulation frequency/period. A single pulse duration of a burst is illustrated for the fourth set of LEDs

The camera C may be any suitable imaging device for acquiring images of a scene. For example it may be digital camera comprising photosensitive cells based on technology such as, for instance charge coupled device (CCD) technology or complementary metal oxide technology (CMOS), or any imaging sensor technology configured to provide exploitable signals in response to visible light. While in the illustrated examples the camera is configured to capture visible light, it will be appreciated that in other embodiments of the invention, the camera may be configured to capture other frequencies of the electromagnetic spectrum, such as for example ultraviolet, infra-red, near infra-red, terahertz etc. It will be appreciated that the camera may be provided with further optical elements such as a variable aperture, a zoom mechanism or an autofocus mechanism to provide enhancement of the captured image. The camera C is synchronized with the illumination control device 200. The camera has a frame acquisition rate which may be adjustable. The camera should have a frequency rate enabling if to acquire frames at a sufficient rate to enable it to acquire frames of the same scene under different illumination conditions rapidly. Typically the acquisition rate of such a camera is in the range of 24Hz to 120Hz, but some specific cameras can offer higher frame rates.

Image processing module 300 obtains images captured by camera C and organizes the captured images into respective image sequences, each image sequence corresponding to an alternate illumination configuration.

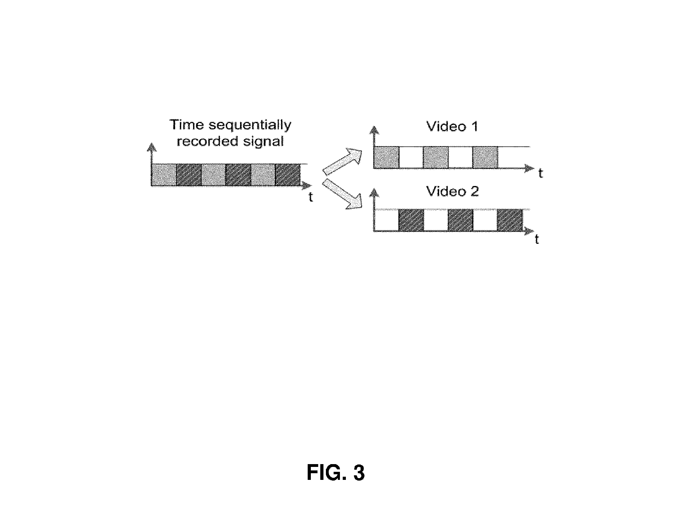

For example, Figure 3 graphically illustrates a sequence of frames captured by the camera. The sequence in the example is made up of two interleaved series of frames, each series corresponding to a respective illumination configuration. Image processing module 300 processes the sequence of frames to obtain two separate frame sub-sequences, each frame sub-sequence corresponding to one of the interleaved series of frames. In this way two separate video sub-sequences are obtained of the same scene under two different illumination configurations. While in the illustrated example of Figure 3, two separate video sub-sequences are illustrated, it will be appreciated that in alternative embodiments of the invention the initial video sequence may be made up of three or more series of frames corresponding to three or more illumination configurations. For example in Figure 2 three separate video sub-sequences can be provided, from the acquired sequence of frames.

The scene S may be a scene being filmed for a movie production for example. The camera in such an example may be a movie camera used in film production. A film director may thus film the same scene using different illumination configurations during a single take.

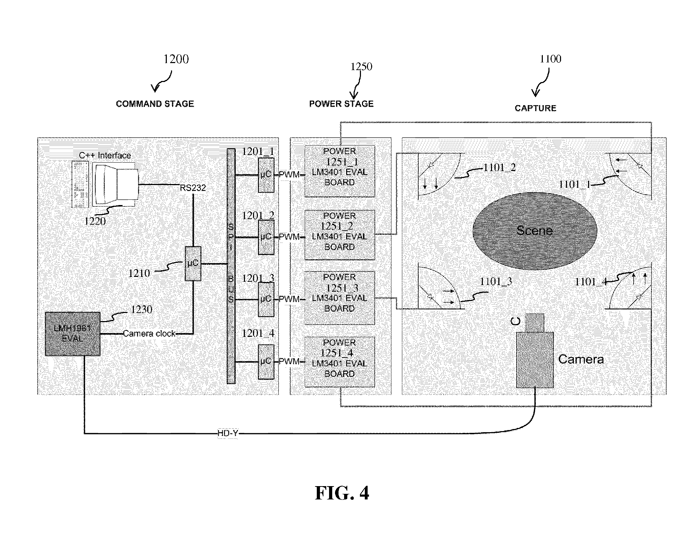

An imaging system according to a particular embodiment of the invention is schematically illustrated in Figure 4. The imaging system is made up of an image capture section 1100, a power section 1250 powering the illumination units of the image capture section and a control section 1200 controlling the power applied the lighting units.

The image capture section 1100 comprises a camera C and four LED illumination units 1101_1 to 1101_4 arranged to illuminate a scene S. The LED illumination units 1101_1 to 1101_4 are each powered by respective power modules 1251_1 to 1251_4 of power section 1250. Control section includes four processor modules 1201_1 to 1201_4. Each processor module 1201_1 to 1204_4 is configured to control the respective power module 1251_1 to 1251_4 by pulse width modulation (PWM) thereby controlling the emission of light emitted in pulse form by LED lighting units 1101_1 to 1101_4.

Global processor 1210 co-ordinates the four processor modules 1201_1 to 1204_4 in accordance with the respective illumination configurations. Global processor 1210 is synchronized with the clock of camera C by interface 1230 in order to control the processor modules 1201_1 to 1204_4 in accordance with the camera frame rate. A user interface module 1220 is provided enabling a user to set the illumination configurations of the scene in accordance, for example, with film shooting requirements. The user interface module 1220 is also provided with a display for displaying camera frames acquired by the camera.

A particular embodiment for controlling pulse width modulation (PWM) will now be described. For a camera acquisition frequency of less than 240 Hz, a minimal modulation frequency of 1 kHz may be used for the PWM employed by the processor modules 1201_1 to 1204_4 to control the power modules 1251_1 to 1251_4 . For example a timer managing the PWM frequency, may be used with a 8 bit PWM frequency parameter setting the number of clock signals and the frequency of the PWM is given by:

$$\text{Frequency} = \frac{K}{\text{parameter}}$$

Where $K = 0.5 \times 10^6$

A value of 1 for the PWM frequency parameter gives a frequency of 500 kHz whereas a value of 250 gives a 2kHz frequency, providing a PWM frequency range that can be selected by the user.

The duty cycle of the PWM can be set by a duty cycle parameter that should be a percentage of the PWM frequency parameter. As an example if the frequency PWM parameter is set to be 250 and a duty cycle of 50% is desired then the duty cycle parameter should be set at 125.

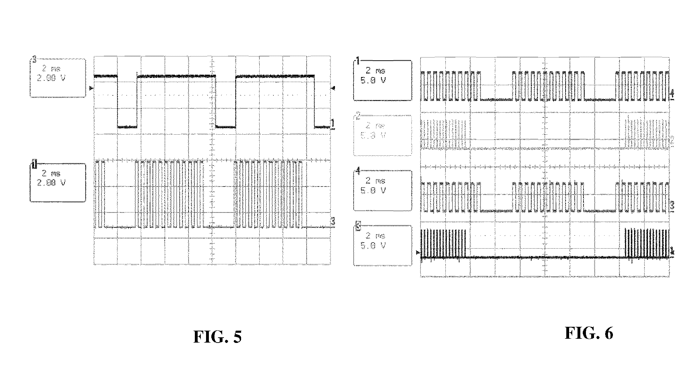

A start command is triggered, the global controller 1210 transmits each vertical image synchronization pulse of the camera to an interruption input of the slave microcontrollers 1201_1 to 1201_4. The slave microcontrollers 1201_1 to 1201_4 execute their interruption routine according to the illumination configuration: If the respective LED unit is to provide light the slave microcontroller awaits the preset time delay, activates the PWM, awaits the time of the burst and turns off the PWM. Figure 5 graphically illustrates an example of PWM generated by a respective controller 1201. The upper line represents the clock signal received by the controller 1201 from the global controller 1210, which in the illustrated example is at a frequency of 120Hz. The second line represents the PWM generated by the slave controller 1201 in response to the clock signal. In this example the PWM has a frequency of 2kHz, a duty cycle of 50%, a time delay of 1 ms and a total pulse time of 6ms.

Figure 6 graphically illustrates an example of the PWM generated by the four control units 1201_1 to 1201_4 of Figure 4 to provide different illumination configurations for different frame series of the sequence of frames acquired by the camera. In this example two sub-sequences are reconstructed from an acquired sequence of images. Each respective illumination configuration applies two lighting units.

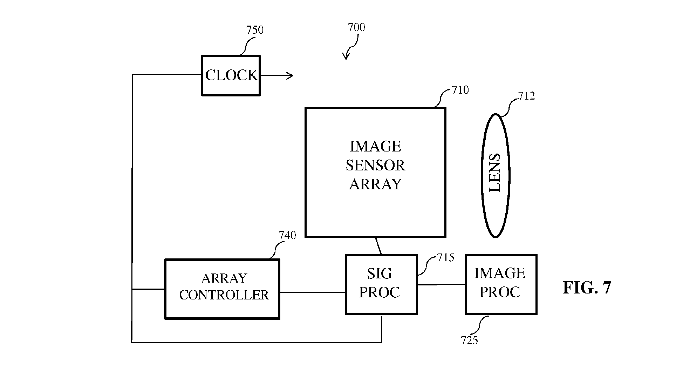

Figure 7 is a simplified functional block diagram illustrating components of an electronic imaging device in accordance with a particular embodiment of the invention. The electronic imaging device may be a dedicated camera such as a camcorder or professional studio camera for capturing a sequence of frames, or an imaging module of a multifunctional electronic device such as a mobile telephone, a smart phone, a personal digital assistant (PDA), or a portable computer such as, for example, a tablet computer, a laptop computer or a notebook computer.

The electronic imaging device 700 comprises an image sensor array 710 for capturing light from the scene S, a lens 712 for guiding light to the sensor array 710, a signal processing unit 715 for processing signals from the sensor array 710, an array controller 740 for controlling the times of exposure of the photocells of the sensor array 710 to light from the scene and a clock 750 which may be used to provide timing synchronization with the control devices of embodiments of the invention. It will be appreciated that the imaging device may be provided with further optical elements such as a variable aperture, a zoom mechanism or an autofocus mechanism to provide enhancement of the captured image.

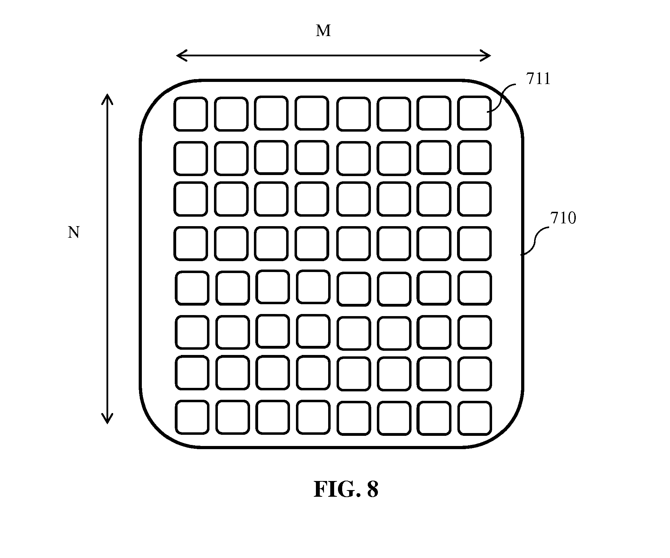

The sensor array 710 is composed of a set of photosensitive cells (photocells) 711 arranged in a bi-dimensional array of N rows and M columns as illustrated in Figure 8. The bi-dimensional array 710 of photocells 711 corresponds to an image region of a rendered image of pixels. Each pixel of a rendered image may correspond to one or more of the photocells 711. Each photocell, in this exemplary embodiment, is a CMOS image sensor. When light hits the CMOS type photocell 711, the photocell 711 is charged with an electrical charge which is proportional to the amount of captured incoming light. The electrical charge signal is then processed by signal processing unit 715, for example it may be converted into a voltage signal to provide a pixel reading value. The signal processing performed may include amplification of the signal and conversion of an analog signal into a digital signal. The exposure time duration of a single photocell 711 corresponds to the duration of time during which the photocell integrates the electrical charge formed by the incident light. In practice, the exposure time duration or integration time corresponds to the time between the reset of a photocell in which the previous charge contained in the photocell is reset to zero by a reset function of the array controller 740 and ends when the charge is read from the photocell by a read function. The array controller 740 generates various commands that are signaled to components of the imaging device 700 including the reset, integrate and readout commands to the image sensor array 710. The operations of resetting, integration and reading are performed for one line of the image array at a time, for example row by row i.e. all the photocells of a line are reset and read together. The signal processing unit 715 processes the signals read from the photocells 711 in response to exposure to the incoming light line by line. Images are reconstructed from the processed signals by the image processing unit 300 (FIG. 1). In practice, the camera exposure time corresponds to the exposure time duration of a line of a captured frame.

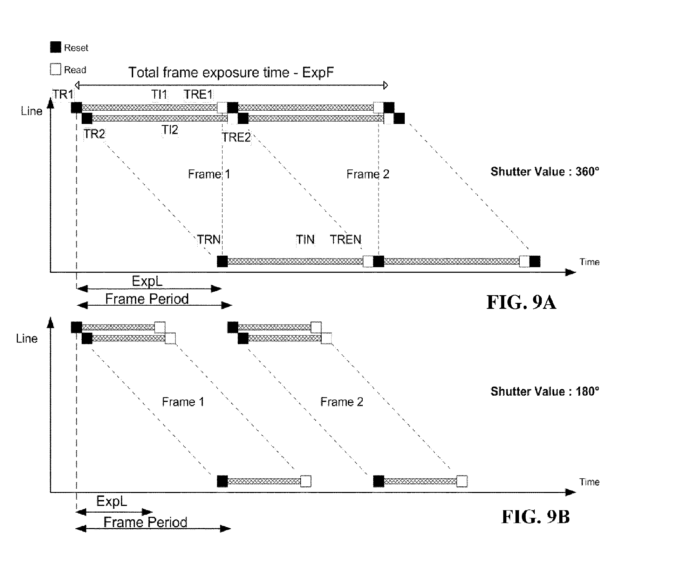

Figures 9A and 9B graphically illustrate examples of row by row processing for a 360° and a 180° shutter value, respectively. The exposure of the rows for charge collection is started by resetting the rows, one by one, with a reset function R controlled by array controller 740. For example with reference to Figure 9A the photocells of the first row of frame 1 are reset at time TR1, exposed during time TI1 for the capture of light induced charge and the total charge of each pixel sensor of the row is read out at time TRE1, the photocells of the second row of frame 1 are reset at time TR2, exposed during time TI2 and read at time TRE2 and the last row of photocells of frame 1 are reset at time TRN, exposed during time TIN and read at time TREN. The duration of time between the reset functions of two successive rows is referred to as a row processing delay RP. The row processing delay RP may also correspond to the duration of time between the read functions of two successive rows.

In embodiments of the invention, the timing of the pulsed illuminations of the lighting units may be controlled to address issues such as temporal distortions. Such distortions result from the use of a rolling shutter on the camera C which makes the actual time during which exposure to incoming light takes place to differ from row to row. In particular the illumination time shift (FDIy) between subsequent illumination events, for example between subsequent illumination bursts, may be adjusted for the different illumination configurations. For example the illumination time shift may be set so as not to be equal to a line exposure time (ExpL) of the camera C such that there is a time shift S in the time of occurrence of an illumination event (for example an illumination burst) within a frame, from frame to frame in which the illumination events occur. In some particular embodiments of the invention the illumination time shift is determined taking into account the camera exposure time (i.e. the time duration of exposure of a line (ExpL)) and the time duration of the illumination event (i.e. the illumination burst duration (Time)) such that the time of occurrence of an illumination event within a frame is temporally shifted from frame to frame. A light controller 1201 may be configured to activate the corresponding LED power module 1250 at an illumination event time shift in accordance with this temporal shift. In one particular embodiment the illumination time shift is based on the sum of the time duration of the exposure of a line and the time duration of the illumination event such that:

$$Time\ shift_{illum} \geq Camera\ Exposure_{duration} + Illumination_{duration} \qquad (1)$$

In one particular embodiment the illumination event time shift is based on the sum of the time duration of the exposure of a line and the time duration of the respective illumination event such that:

$$Time\ shift_{illum} = Camera\ Exposure_{duration} + Illumination_{duration} \quad (2)$$

For example if the exposure time duration of a scan line is 20ms corresponding to a camera frequency of 50Hz and the illumination event duration of a lighting unit 1101 is 2ms, the illumination event time shift (FDIy) between illumination events will be 22ms i.e. the illumination or flash frequency will be 45.45Hz.

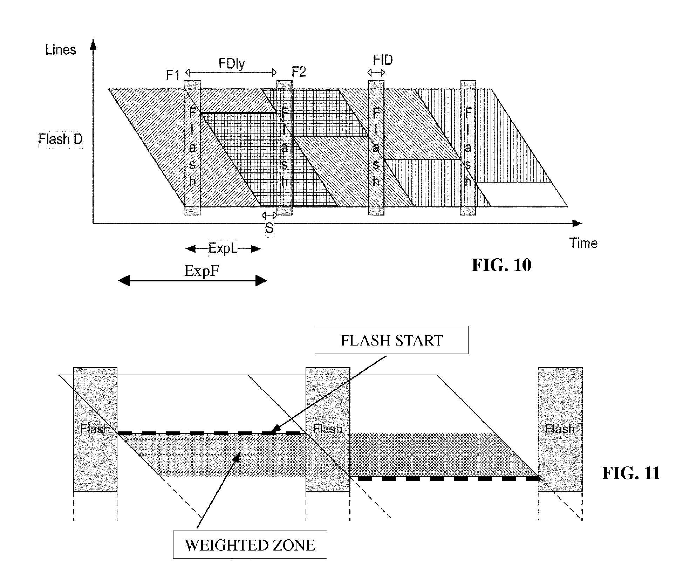

An example of an illumination control procedure in accordance with an embodiment of the invention is graphically illustrated in Figure 10. In this particular embodiment the Illumination time shift FDIy is set to the sum of the time duration of the exposure of a line ExpL and the time duration of the illumination event FID. In this example, the start of the first illumination event F1 occurs at the start of exposure of the last row N of photocells 711 of during the first camera frame. As depicted in Figure 11, the same illumination event F1 occurs during exposure of the initial rows of the image sensor array during the first frame and the second frame - i.e. the illumination duration FID of the illumination event covers the end of exposure of a line of photocells 711 in the first frame and the beginning of exposure of the same line of photocells 711 in the subsequent second frame. In Frame 2, following Frame 1, the second illumination event F2 occurs at a different relative time within the frame by a time shift S - in this example, after exposure of the last line of photocells 711 has started. In this example the time shift S is substantially equal to the illumination event duration FID. Each illumination event has a illumination duration FID. It can be seen that, during the capture of the sequence of frames the illumination does not illuminate the same row of photocells 711 twice within one frame acquisition time, i.e. each line of an image acquired during a frame has a single illumination event occurrence during that frame. As a result any intra-line distortion is prevented.

Post processing on captured frames of a video sequence is then performed by imaging processing unit to reconstruct a set of images from the data read out from the scan lines of the captured sequence of frames. Image regions of consecutive captured frames which share the same illumination event are identified so that an image can be reconstructed from image regions sharing the same illumination event. During reconstruction of an image, lines of the video sequence of frames that are temporally concordant to share an illumination event are reassembled to form an image. In Figure 10, for example, each image region around an illumination event occurrence, indicated by the same hatched pattern represents all the scan lines that are illuminated by the same illumination event. Reassembling lines of the same illumination event occurrence enables an image to be obtained in which temporal distortion effects are minimised.

For a video sequence of captured frames as illustrated in Figure 10, the output frequency of the reconstructed images is equal to the frequency of the illumination events. For example if the exposure time is 20ms corresponding to a camera frequency of 50Hz and the illumination duration is 2ms, the illumination time shift between camera illumination events will be 22ms (i.e. the illumination frequency will be 45.45Hz) and the output sequence will be rendered at a frequency corresponding to the illumination frequency of 45.45Hz.

Figure 11 graphically illustrates the image regions of two consecutive frames corresponding to a single illumination event. The dotted lines define the beginning and the end boundaries of the single illumination event occurrence in terms of lines of the image sensor array. In the hatched area, illumination from the single illumination event has been distributed between two consecutive frames. Consequently, during image reconstruction, a reconstructed image is recomposed from the lines of both frames corresponding to this image region, by applying a suitable weighting function to the said overlapping lines. The weighting function used may be determined in dependence upon the lighting conditions and the camera used.

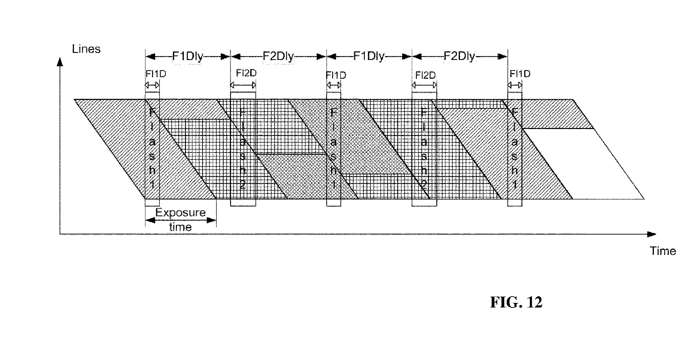

The principle of the illumination time shift parameter may be applied for a plurality of video subsequences with different illumination configurations illumination. Figure 12 graphically illustrates an example in which two sets of lighting units are used with respect to the frame acquisition rate of the camera to provide two sub-sequences of images from an acquired sequence of frames. The illumination parameters may be set for each lighting unit set individually and so the equation (2) for better processing of temporal effects becomes:

$$Time\ shift^1_{illum} = Camera\ Exposure_{duration} + Illumination^1_{duration}$$

$$Time\ shift^2_{illum} = Camera\ Exposure_{duration} + Illumination^2_{duration}$$

For the first subsequence the illumination time shift F1DIy is set to the sum of the camera exposure time and the illumination pulse time FI1D. For the second subsequence of frames the illumination time shift F2DIy is set to the sum of the camera exposure time and the illumination pulse time FI2D.

The illumination time shift may be set for different frames for different illumination configurations according to the desired display frequency of the respective series of images of the respective sub-sequence of captured frames.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been described with respect to film production, it will be appreciated that the invention may be applied to other fields where illumination can be controlled, for example in projector display systems.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method of capturing images of a scene comprising
   illuminating the scene with at least one light unit in accordance with a plurality of illumination configurations applied in an alternate manner;
   capturing a sequence of images of the illuminated scene with at least one imaging device; the sequence of images comprising a plurality of interleaved series of images, each image series corresponding to a respective illumination configuration; wherein each illumination configuration is provided by controlling at least one illumination parameter of the light units in time synchronization with the at least one imaging device; and
   reconstructing a series of images of the scene, from the captured sequence of images for each illumination configuration.

2. A method according to claim 1 wherein
   the light units are configured to illuminate the scene in a burst of illumination pulses comprising one or more illumination pulses; and
   the at least one controlled illumination parameter includes at least one of illumination frequency, illumination burst duration, illumination pulse frequency within a burst, illumination duty cycle, illumination burst delay; illumination power, and illumination frame offset.

3. A method according to claim 2 wherein controlling the at least one illumination parameter is performed by pulse width modulation to generate the burst of illumination pulses.

4. A method according to claim 2 or 3 wherein controlling the at least one illumination parameter comprises controlling the total pulse illumination time with respect to the exposure time of the at least one imaging device.

5. A method according to any preceding claim wherein controlling the at least one illumination parameter comprises controlling an illumination time shift wherein the time occurrence of the illumination within an image shifts from frame to frame of an image series.

6.  A method according to claim 5 wherein the illumination time shift is determined in dependence upon the exposure time duration of the camera and the duration of the burst of illumination pulses.

7.  A method according to claim 5 or 6 wherein the illumination time shift is determined based on the display frequency of the reconstructed series of images.

8.  A method according to claim 6 or 7 wherein the illumination time shift is greater than or equal to the sum of the exposure time duration and the time duration of the burst of illumination pulses.

9.  A method of filming a scene for a movie under different lighting conditions comprising the method of any preceding claim.

10. An image acquisition system for capturing images of a scene comprising:

    at least one light unit for illuminating the scene;
    a light control device for controlling illumination by the at least one light unit in accordance with a plurality of illumination configurations applied in an alternate manner; wherein the light control device is configured to control at least one illumination parameter of the at least one light unit in time synchronization with the at least one imaging device to provide a respective illumination configuration
    an imaging device for capturing a sequence of images of the illuminated scene; the sequence of images comprising a plurality of interleaved series of images, each image series corresponding to a respective illumination configuration; and
    an image acquisition device for reconstructing, from the captured sequence of images, a series of images of the scene for each illumination configuration of the plurality of illumination configurations.

11. A system according to claim 10 wherein the at least one light unit is configured to illuminate the scene by a burst of illumination pulses, each set comprising one or more illumination pulses; and
    the at least one controlled illumination parameter includes at least one of illumination frequency, illumination burst duration, illumination pulse frequency within a burst, illumination duty cycle, illumination burst delay; illumination power, and illumination frame offset.

12. A system according to claim 10 or 11 wherein the light control device comprises a pulse width modulator for performing pulse width modulation to generate the burst of illumination pulses.

13. A system according to any one of claims 10 to 12, wherein the light control device is configured to control the total pulse illumination time with respect to the exposure time of the at least one imaging device.

14. A system according to any one of claims 10 to 13 wherein the light control device is configured to control an illumination time shift wherein the time occurrence of the illumination within an image shifts from frame to frame of an image series.

15. A film production system for filming a scene for a movie under different lighting conditions comprising the image acquisition system according to any one of claims 10 to 14.

**FIG. 1**

**FIG. 2**

**FIG. 3**

**FIG. 4**

**FIG. 5**

**FIG. 6**

750

700

710   712

CLOCK

IMAGE
SENSOR
ARRAY

LENS

740

715

ARRAY
CONTROLLER

SIG
PROC

IMAGE
PROC

**FIG. 7**

725

**FIG. 8**

FIG. 9A

FIG. 9B

FIG. 10

FLASH START

WEIGHTED ZONE

FIG. 11

**FIG. 12**

Europäisches
Patentamt

European
Patent Office

Office européen
des brevets

# EUROPEAN SEARCH REPORT

Application Number

EP 14 30 5599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2005/276441 A1 (DEBEVEC PAUL E [US]) 15 December 2005 (2005-12-15)<br>* figures 1,3 *<br>* paragraphs [0003], [0013] - [0016], [0020], [0021], [0027], [0045], [0046] * | 1-3, 9-12,15<br>4,13 | INV.<br>H04N5/235 |
| X | US 2003/063191 A1 (CHALLAPALI KIRAN [US] ET AL) 3 April 2003 (2003-04-03)<br>* figure 2 *<br>* paragraphs [0015], [0016], [0019], [0021] * | 1,2, 9-11,15 | |
| X | WO 2010/049578 A1 (LETONSAARI MIKA DANIEL [FI]) 6 May 2010 (2010-05-06)<br>* figures 1,4,5 *<br>* page 10 - page 11 *<br>* page 14 - page 17 * | 1,2,10, 11 | |
| X<br>Y | JP 5 452785 B1 (OLYMPUS MEDICAL SYSTEMS CORP [JP]) 26 March 2014 (2014-03-26)<br>* figures 2-4,9,10,12,13 *<br>* paragraphs [0022], [0052], [0055], [0056], [0059], [0085] - [0088], [0098] - [0105], [0109] * | 1-4, 10-14<br>5-8,15 | TECHNICAL FIELDS SEARCHED (IPC)<br><br>H04N |
| X<br>A | US 2013/307951 A1 (ONO WATARU [JP]) 21 November 2013 (2013-11-21)<br>* figures 3,4,8,10 *<br>* paragraphs [0044], [0053], [0058] - [0060], [0092], [0093] * | 1,2,10, 11<br>5-8,15 | |

-/--

The present search report has been drawn up for all claims

| Place of search | Date of completion of the search | Examiner |
|---|---|---|
| Munich | 30 June 2014 | Keck, Wolfram |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

| | Europäisches Patentamt / European Patent Office / Office européen des brevets | **EUROPEAN SEARCH REPORT** | Application Number |
|---|---|---|---|

Application Number

EP 14 30 5599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BRADLEY D ET AL: "Synchronization and rolling shutter compensation for consumer video camera arrays", COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20 June 2009 (2009-06-20), pages 1-8, XP031606989, ISBN: 978-1-4244-3994-2 | 5-8,15 | |
| A | * figures 1,3,4 * * paragraphs [0003], [0004] * ----- | 1,10 | |

TECHNICAL FIELDS SEARCHED (IPC)

The present search report has been drawn up for all claims

| Place of search | Date of completion of the search | Examiner |
|---|---|---|
| Munich | 30 June 2014 | Keck, Wolfram |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5599

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2014

| Patent document cited in search report | | Publication date | Patent family member(s) | | Publication date |
|---|---|---|---|---|---|
| US 2005276441 | A1 | 15-12-2005 | US | 2005276441 A1 | 15-12-2005 |
| | | | WO | 2005124660 A2 | 29-12-2005 |
| US 2003063191 | A1 | 03-04-2003 | US | 2003063191 A1 | 03-04-2003 |
| | | | WO | 03030526 A1 | 10-04-2003 |
| WO 2010049578 | A1 | 06-05-2010 | NONE | | |
| JP 5452785 | B1 | 26-03-2014 | CN | 103841881 A | 04-06-2014 |
| | | | JP | 5452785 B1 | 26-03-2014 |
| | | | WO | 2013175908 A1 | 28-11-2013 |
| US 2013307951 | A1 | 21-11-2013 | CN | 103781398 A | 07-05-2014 |
| | | | EP | 2735262 A1 | 28-05-2014 |
| | | | JP | 5452776 B2 | 26-03-2014 |
| | | | US | 2013307951 A1 | 21-11-2013 |
| | | | WO | 2013069644 A1 | 16-05-2013 |

EPO FORM P0459

For more details about this annex : see Official Journal of the European Patent Office, No. 12/82